# EUROPEAN PATENT APPLICATION

(11) **EP 4 672 365 A1**
(43) Date of publication of application: **31.12.2025**
(21) Application number: 23944975.4
(22) Date of filing: 29.12.2023
(51) Int. Cl.: H01M 4/36

(54) **POSITIVE ELECTRODE ACTIVE MATERIAL AND PREPARATION METHOD THEREFOR, AND BATTERY CELL AND ELECTRIC APPARATUS**

(30) Priority: 07.07.2023 CN 202310833253
(71) Applicant: Contemporary Amperex Technology Co., Limited, Ningde, Fujian 352100 (CN)
(72) Inventor: LENG, Xue, Ningde, Fujian 352100 (CN); HE, Siyuan, Ningde, Fujian 352100 (CN); LIU, Hongyu, Ningde, Fujian 352100 (CN); BIE, Changfeng, Ningde, Fujian 352100 (CN); NI, Huan, Ningde, Fujian 352100 (CN); LIU, Na, Ningde, Fujian 352100 (CN)
(74) Representative: Lorenz Seidler Gossel Part. mbB
(86) International application number: PCT/CN2023/143359
(87) International publication number: WO 2025/010970

(57) **Abstract**

Provided are a positive electrode active material and a preparation method therefor, a battery cell, and an electric device. The positive electrode active material includes a lithium-containing phosphate, where an X-ray diffraction pattern of the positive electrode active material tested in a fully charged state satisfies: there is a (311) crystal plane peak in a range of 35° to 36° and a (011) crystal plane peak in a range of 20° to 21°, and the ratio of a peak intensity I₃₁₁ of the (311) crystal plane peak to a peak intensity I₀₁₁ of the (011) crystal plane peak satisfies I₃₁₁/I₀₁₁ ≥ 0.008. The positive active material can improve the cycle performance of a battery.

## Description

### CROSS-REFERENCE TO RELATED APPLICATIONS

The present application claims priority to Patent Application No. 202310833253.6, filed on July 07, 2023 and entitled "POSITIVE ELECTRODE ACTIVE MATERIAL AND PREPARATION METHOD THEREFOR, BATTERY CELL, AND ELECTRIC DEVICE", which is incorporated herein by reference in its entirety.

### TECHNICAL FIELD

The present application relates to a positive electrode active material and a preparation method therefor, a battery cell, and an electric device.

### BACKGROUND

In recent years, batteries are widely used in energy storage power stations. For example, the demand for peak-valley adjustment of a power grid increases day by day. Therefore, the requirement for the cycle life of a energy storage battery also increases. However, how to make the battery have a longer cycle life is still a difficulty in current battery development.

### SUMMARY

The present application provides a positive electrode active material and a preparation method therefor, a battery cell, and an electric device, which can improve the cycle life of a battery.

According to a first aspect, the present application provides a positive electrode active material, including a lithium-containing phosphate, where an X-ray diffraction pattern of the positive electrode active material tested in a fully charged state satisfies: there is a (311) crystal plane peak in a range of 35° to 36° and a (011) crystal plane peak in a range of 20° to 21°, and the ratio of a peak intensity I₃₁₁ of the (311) crystal plane peak to a peak intensity I₀₁₁ of the (011) crystal plane peak satisfies I₃₁₁/I₀₁₁ ≥ 0.008.

In the positive electrode active material provided by the preset application, a part of the lithium-containing phosphate is subjected to no lithium deintercalation in the initial fully-charged state, the part of the lithium-containing phosphate subjected to no lithium deintercalation may be gradually activated during battery cycling, and active lithium may be gradually deintercalated. Therefore, the positive electrode active material provided by the preset application may play a role of a capacity sustained-release agent, to enable a battery using it to have a long cycle life.

In any embodiment, 0.009 ≤ I₃₁₁/I₀₁₁ ≤ 0.037, optionally, 0.012 ≤ I₃₁₁/I₀₁₁ ≤ 0.024. In this way, the battery may be enabled to have a long cycle life, a high energy density, and good kinetic performance.

In any embodiment, at least part of a surface of the lithium-containing phosphate has a carbon coating layer thereon.

In any embodiment, the weight content of the carbon coating layer is denoted as m, and based on the total weight of the positive electrode active material, a specific surface area of the positive electrode active material is denoted as A, with the unit of m²/g, 5.0 ≤ A/(100×m) ≤ 9.0, and optionally, 6.4 ≤ A/(100×m) ≤ 8.2. In this way, the battery may be better enabled to have a long cycle life, a high energy density, and good kinetic performance.

In any embodiment, 1.0% ≤ m ≤ 3.4%, optionally 1.2% ≤ m ≤ 2.0%. When the weight content m of the carbon coating layer is within the range described above, the carbon coating layer may better coat a lithium-containing phosphate body, playing a role of over-coating the lithium-containing phosphate body. Therefore, a part of an initial capacity of the positive electrode active material can be hidden, enabling the positive electrode active material to play a role of a capacity sustained-release agent.

In any embodiment, A ≤ 18.5 m²/g, optionally A ≤ 13.5 m²/g. When the specific surface area of the positive electrode active material is within the range described above, machining performance of a positive electrode paste and a positive electrode sheet may be improved, thereby reducing the problems of excessive adhesion of the paste and cracking of a coating.

In any embodiment, the positive electrode active material is of a single-crystalline structure or a single-crystalline-like structure.

In any embodiment, a volume distribution particle size Dv50 of the positive electrode active material is 0.6 µm to 2.5 µm, optionally 0.7 µm to 2.3 µm. When the volume distribution particle size Dv50 of the positive active material is within the range described above, the positive active material may have good ion transportation performance, enabling the battery to have good power performance, and the machining performance of the positive electrode paste and the positive electrode sheet may be improved, for example, the problems of excessive adhesion of the paste and cracking of a coating may be reduced.

In any embodiment, a powder resistivity of the positive electrode active material at 25°C is denoted as δ, δ ≤ 20 Ω.cm, optionally, δ ≤ 12.1 Ω.cm. When the powder resistivity of the positive electrode active material is within the range described above, electronic conductivity of the lithium-containing phosphate may be improved, and hydrophilicity of the lithium-containing phosphate may be degraded, reducing moisture adsorption, and thereby further improving the cycle performance of the battery.

In any embodiment, the lithium-containing phosphate includes one or more of lithium iron phosphate and a doping-modified compound thereof. Optionally, the lithium-containing phosphate comprises a material having a molecular formula of LiₘAₓFe_{1-y}B_{y}P_{1-z}C_{z}O₄₋ₙDₙ, wherein A comprises one or more elements of Zn, Al, Na, K, and Mg, B comprises one or more elements of Cu, Mn, Cr, Zn, Pb, Ca, Co, Ni, Sr, Nb, and Ti, C comprises one or more elements of B, S, Si, and N, and D comprises one or more elements of S, F, Cl, and Br; m is selected from a range of 0.5 to 1.15, optionally selected from a range of 0.95 to 1.05; x is selected from a range of 0 to 0.1, optionally selected from a range of 0.001 to 0.005; y is selected from a range of 0 to 0.5, optionally selected from a range of 0.001 to 0.1; z is selected from a range of 0 to 0.5, optionally selected from a range of 0.001 to 0.1; and n is selected from a range of 0 to 0.5, optionally selected from a range of 0.001 to 0.1.

According to a second aspect, the present application provides a preparation method for a positive electrode active material, including the following steps: providing a precursor for a lithium-containing phosphate; grinding the precursor for the lithium-containing phosphate and a carbon source; and increasing the temperature of a ground material to a first temperature T1 at a first rate in a protective gas atmosphere, maintaining the temperature at the first temperature T1 for a first time t1, then increasing the temperature to a second temperature T2 at a second rate, and maintaining the temperature at the second temperature T2 for a second time t2, so as to obtain a positive electrode active material, where the positive electrode active material includes a lithium-containing phosphate, and an X-ray diffraction pattern of the positive electrode active material tested in a fully charged state satisfies: there is a (311) crystal plane peak in a range of 35° to 36° and a (011) crystal plane peak in a range of 20° to 21°, and the ratio of a peak intensity I₃₁₁ of the (311) crystal plane peak to a peak intensity I₀₁₁ of the (011) crystal plane peak satisfies I₃₁₁/I₀₁₁ ≥ 0.008.

In any embodiment, the first rate is less than or equal to 4 °C/min, optionally 1 °C/min to 4 °C/min. In this way, the positive electrode active material may play a role of a capacity sustained-release agent, and a positive electrode active material particle may have an appropriate primary particle (the primary particle herein is a primary particle of a single-crystalline-like particle) size, enabling the positive electrode active material to have good kinetic performance, thereby making the battery using the positive electrode active material have a long cycle life, good kinetic performance, and high energy conversion efficiency.

In any embodiment, the first temperature T1 is greater than or equal to 400°C, optionally 400°C to 600°C, and more optionally 450°C to 550°C. By adjusting the first temperature T1 as being within the range described above, the carbon source may fully decompose to result in carbon, and a positive electrode active material particle may have a uniform primary particle (the primary particle herein is a primary particle of a single-crystalline-like particle) size, enabling the positive electrode active material to better play a role of a capacity sustained-release agent, thereby making the battery using the positive electrode active material have a long cycle life.

In any embodiment, the first time t1 is greater than or equal to 1 h, optionally 1 h to 7 h, and more optionally 3 h to 5 h. In this way, the positive electrode active material may play a role of a capacity sustained-release agent, and a positive electrode active material particle may have an appropriate primary particle (the primary particle herein is a primary particle of a single-crystalline-like particle) size, enabling the positive electrode active material to have good kinetic performance, thereby making the battery using the positive electrode active material have a long cycle life, good kinetic performance, and high energy conversion efficiency.

In any embodiment, the second temperature T2 is greater than or equal to 720°C, optionally 720°C to 850°C, and more optionally 750°C to 810°C. In this way, a positive electrode active material particle may have an appropriate primary particle (the primary particle herein is a primary particle of a single-crystalline-like particle) size, enabling the positive electrode active material to have good kinetic performance and to play a role of a capacity sustained-release agent, thereby making the battery using the positive electrode active material have a long cycle life, good kinetic performance, and high energy conversion efficiency.

In any embodiment, the second rate is 1 °C/min to 10 °C/min, optionally 5 °C/min to 9 °C/min. In this way, a positive electrode active material particle may have an appropriate primary particle (the primary particle herein is a primary particle of a single-crystalline-like particle) size, enabling the positive electrode active material to have good kinetic performance and to play a role of a capacity sustained-release agent.

In any embodiment, the second time t2 is 5 h to 20 h, optionally 8 h to 15 h. In this way, a positive electrode active material particle may have an appropriate primary particle (the primary particle herein is a primary particle of a single-crystalline-like particle) size, enabling the positive electrode active material to have good kinetic performance and to play a role of a capacity sustained-release agent.

In any embodiment, the carbon source includes a first carbon source including a water-soluble polymer. When the first carbon source includes a water-soluble polymer, the water-soluble polymer may fully coat the precursor for the lithium-containing phosphate, making the formed carbon coating layer more uniform and dense, which facilitates hiding a part of an initial capacity of the positive electrode active material, enabling the positive electrode active material to play a role of a capacity sustained-release agent.

In any embodiment, the weight content of the first carbon source is ≥ 50%, optionally 50% to 70%, based on the total weight of the carbon source. In this way, it facilitates enabling the battery to have a long cycle life, a high energy density, and good kinetic performance.

In any embodiment, the water-soluble polymer includes one or more of polyethylene glycol, polyaniline, and respective derivatives thereof. When the water-soluble polymer is within the range described above, electronic conductivity of the lithium-containing phosphate may be improved, and the specific surface area of the prepared positive electrode active material may be reduced, making the formed carbon coating layer more uniform and dense, which facilitates hiding a part of an initial capacity of the positive electrode active material, enabling the positive electrode active material to play a role of a capacity sustained-release agent.

In any embodiment, the carbon source further includes a second carbon source including one or more of glucose, sucrose, lactose, and maltose.

In any embodiment, the weight content of the second carbon source is ≤ 50%, optionally 30% to 50%, based on the total weight of the carbon source. In this way, it facilitates enabling the battery to have a long cycle life, a high energy density, and good kinetic performance, and also facilitates reducing the raw material cost of the battery.

According to a third aspect, the present application provides a battery cell, including a positive electrode sheet including a positive electrode current collector and a positive electrode film layer disposed on at least one surface of the positive electrode current collector, where the positive electrode film layer includes the positive electrode active material according to the first aspect of the present application or the positive electrode active material prepared by the preparation method according to the second aspect of the present application.

According to a fourth aspect, the present application provides an electric device including the battery cell according to the third aspect of the present application.

The electric device of the present application includes the battery cell provided by the present application, and thus has at least the same advantages as the battery cell.

### DESCRIPTION OF DRAWINGS

In order to more clearly illustrate the technical solutions in the embodiments of the present application, drawings required to be used in the embodiments of the present application are briefly described below. It is clear that the drawings described below show only some embodiments of the present application, and those skilled in the art may further derive other drawings from the drawings without creative effort.
FIG. 1 is a schematic diagram of an embodiment of a battery cell according to the present application.
FIG. 2 is a schematic exploded view of the embodiment of the battery cell in FIG. 1.
FIG. 3 is a schematic diagram of an embodiment of a battery module according to the present application.
FIG. 4 is a schematic diagram of an embodiment of a battery pack according to the present application.
FIG. 5 is a schematic exploded view of the embodiment of the battery pack shown in FIG. 4.
FIG. 6 is a schematic diagram of an embodiment of an electric device including a battery of the present application as a power supply.
FIG. 7 is an X-ray diffraction pattern of a positive electrode sheet obtained by disassembling a battery prepared in Example 5 after the battery is fully charged.

The figures are not necessarily drawn to the actual scale. Reference signs: 1 - battery pack; 2 - upper box body; 3 - lower box body; 4 - battery module; 5 - battery cell; 51 - housing; 52 - electrode assembly; 53 - cover plate.

### DESCRIPTION OF EMBODIMENTS

The embodiments of the positive electrode active material and preparation method therefor, the battery cell, and the electric device of the present application are described below in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The drawings and the following descriptions are provided for those skilled in the art to fully understand the present application, and are not intended to limit subject matters described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions, and it is conceivable that such technical solutions should be included in the disclosure of the present application.

Unless otherwise specified, all technical solutions and optional technical solutions of the present application may be combined with each other to form new technical solutions, and it is conceivable that such technical solutions should be included in the disclosure of the present application.

Unless otherwise specified, all steps in the present application may be performed sequentially or randomly, preferably sequentially. For example, the method includes steps (a) and (b), meaning that the method may include steps (a) and (b) performed sequentially or steps (b) and (a) performed sequentially. For example, the method mentioned above may further include step (c), meaning that step (c) may be added to the method in any order, e.g., the method may include steps (a), (b), and (c), steps (a), (c), and (b), or steps (c), (a), and (b), etc.

In the present application, terms "first", "second", etc. are used to distinguish different objects and are not intended to describe a particular order or primary/secondary relationship, unless otherwise specified.

In the present application, the terms "a plurality of" and "various" mean two or more.

In the description of the embodiments of the present application, unless otherwise specified, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

Unless otherwise specified, the terms used in the present application have the meanings commonly understood by those skilled in the art.

Unless otherwise specified, the numerical values of each parameter mentioned in the present application can be measured by various test methods commonly used in the art, for example, they can be measured according to the test methods provided in the embodiments of the present application. A test temperature for each parameter is 25°C, unless otherwise specified.

A battery mentioned in the embodiments of the present application may be a single physical module including one or a plurality of battery cells to provide a higher voltage and capacity. For example, the battery mentioned in the present application may include a battery cell, a battery module, a battery pack, or the like.

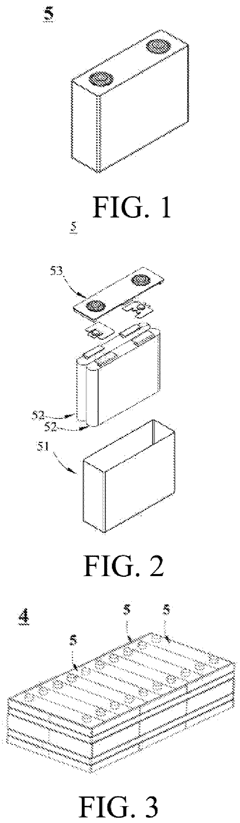

The battery cell is a minimum unit constituting a battery, which can implement charge and discharge functions alone. The battery cell may be in a shape of a cylinder, a cuboid, or other shapes, which are not limited in the embodiments of the present application. FIG. 1 shows a battery cell 5 of a cuboid structure as an example.

When there are a plurality of battery cells, the plurality of battery cells are connected in series, in parallel, or in series-parallel through a busbar component. In some embodiments, the battery may be a battery module; and when there are a plurality of battery cells, the plurality of battery cells are arranged and fixed to form a battery module. In some embodiments, the battery may be a battery pack including a box body and a battery cell, where the battery cell or the battery module is accommodated in the box body. In some embodiments, the box body may serve as a part of a chassis structure of a vehicle. For example, a part of the box body may be at least part of a chassis of a vehicle, or a part of the box body may be at least part of a transverse beam and a longitudinal beam of a vehicle.

In some embodiments, the battery may be an energy storage device. The energy storage device includes an energy storage container, an energy storage cabinet, and the like.

The battery cell generally includes an electrode assembly. The electrode assembly generally includes a positive electrode sheet and a negative electrode sheet, and may be a wound structure or a laminated structure, which is not limited in the embodiments of the present application.

The battery cell may further include an outer package that may be used to package an electrode assembly and an electrolyte. The outer package may be a hard shell, such as a hard plastic shell, an aluminum shell, or a steel shell. The outer package may also be a pouch, such as a bag-type pouch. The material of the pouch may be plastic, such as one or more of polypropylene (PP), polybutylene terephthalate (PBT), and polybutylene succinate (PBS).

In some embodiments, as shown in FIG. 2, the outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The electrode assembly 52 is packaged in the accommodating chamber. The battery cell 5 may have one or more electrode assemblies 52, and the number of the electrode assemblies may be adjusted as needed.

In some embodiments, the battery cells may be assembled into a battery module. The battery module may include a plurality of battery cells, and the specific number of the battery cells may be adjusted according to application and capacity of the battery module. FIG. 3 is a schematic diagram of a battery module 4 as an example. As shown in FIG. 3, in the battery module 4, a plurality of battery cells 5 may be arranged sequentially in a length direction of the battery module 4. Certainly, the battery cells may alternatively be arranged in any other manner. Further, the plurality of battery cells 5 may be fixed by fasteners.

Optionally, the battery module 4 may further include a housing having an accommodating space in which the plurality of battery cells 5 are accommodated.

In some embodiments, the battery modules described above may be assembled into a battery pack, and the number of battery modules included in the battery pack may be adjusted according to the application and capacity of the battery pack.

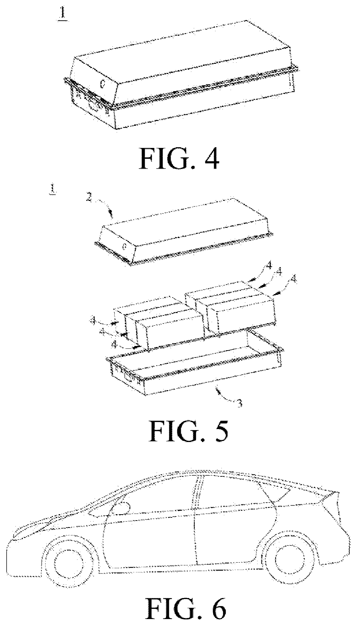

FIG. 4 and FIG. 5 are schematic diagrams of a battery pack 1 as an example. As shown in FIG. 4 and FIG. 5, the battery pack 1 may include a box body and a plurality of battery modules 4 disposed in the box body. The box body includes an upper box body 2 and a lower box body 3, where the upper box body 2 is configured to cover the lower box body 3 to form a closed space for accommodating the battery modules 4. The plurality of battery modules 4 may be arranged in the box body in any manner.

To improve the cycle life of the battery, currently, a strategy generally used is to perform lithium supplementation. However, large-scale industrialization of the lithium supplementation technology still requires technical progress, and a lithium supplement to a positive electrode and a lithium supplement to a negative electrode both result in a low lithium utilization rate and an increase in costs.

Another common strategy is to add some additives to an electrolyte. The principle of an additive generally is to form a dense SEI film at a negative electrode or form a dense CEI film at a positive electrode, which, however, usually deteriorates dynamics performance of the battery, thereby reducing energy conversion efficiency, and results in limited improvement to the cycle life of the battery.

In view of above, the inventor proposed a novel positive electrode active material that enables a battery using it to have a long cycle life.

The positive electrode active material provided in the embodiments of the present application includes a lithium-containing phosphate, and an X-ray diffraction pattern of the positive electrode active material tested in a fully charged state satisfies: there is a (311) crystal plane peak in a range of 35° to 36° and a (011) crystal plane peak in a range of 20° to 21°, and the ratio of a peak intensity I₃₁₁ of the (311) crystal plane peak to a peak intensity I₀₁₁ of the (011) crystal plane peak satisfies I₃₁₁/I₀₁₁ ≥ 0.008.

The X-ray diffraction pattern of the positive electrode active material tested in the fully charged state may be tested by performing a full-charge test on a battery including the positive electrode active material, then detaching a positive electrode sheet from the fully charged battery, and performing a test using an X-ray diffractometer.

The positive electrode active material in the fully charged state corresponds to the battery including the positive electrode active material in the fully charged state, and the positive electrode active material is in a lithium deintercalation state.

In an X-ray diffraction analysis test, a copper target may be used as an anode target, a CuK α-ray is used as a radiation source, a ray wavelength is λ = 1.5418 Å, a scanning 20 angle range may be 15° to 45°, and a scanning rate may be 2 °/min.

The (311) crystal plane peak represents a diffraction peak of the lithium-containing phosphate subjected to no lithium deintercalation, and the (011) crystal plane peak represents a diffraction peak of the lithium-containing phosphate subjected to lithium deintercalation. The ratio of the peak intensity I₃₁₁ of the (311) crystal plane peak to the peak intensity I₀₁₁ of the (011) crystal plane peak may be the ratio of a peak height of the (311) crystal plane peak to a peak height of the (011) crystal plane peak.

During the full charge test on the positive electrode active material (i.e., the battery including the positive electrode active material), the battery may be charged with a constant current at a rate of 1C to an upper-limit cut-off voltage, and then charged with a constant voltage to a current of 0.05C. A test temperature is 25°C. When the positive electrode active material is lithium iron phosphate (LiFePO₄) and a doping-modified compound thereof, the upper-limit cut-off voltage may be 3.65 V.

The X-ray diffraction pattern of the positive electrode active material provided in the embodiments of the present application that is tested in the fully charged state has the (311) crystal plane peak and the (011) crystal plane peak, and the ratio of the peak intensity I₃₁₁ of the (311) crystal plane peak to the peak intensity I₀₁₁ of the (011) crystal plane peak satisfies I₃₁₁/I₀₁₁ ≥ 0.008. It indicates that in the positive electrode active material, a part of the lithium-containing phosphate is subjected to no lithium deintercalation in the initial fully-charged state, the part of the lithium-containing phosphate subjected to no lithium deintercalation may be gradually activated during battery cycling, and active lithium may be gradually deintercalated. Therefore, the positive electrode active material provided in the embodiments of the preset application may play a role of a capacity sustained-release agent, to enable a battery using it to have a long cycle life.

In some embodiments, 0.008 ≤ I₃₁₁/I₀₁₁ ≤ 0.037. When I₃₁₁/I₀₁₁ is greater than 0.037, the positive electrode active material has much lithium phosphate subjected to no lithium deintercalation in the initial fully-charged state, that is, a large part of an initial capacity thereof is hidden, thereby facilitating the improvement of the cycle life of the battery. However, the initial capacity of the positive electrode active material is reduced, and a lithium ion transmission rate of the positive electrode active material is also reduced, thereby affecting an energy density and kinetic performance of the battery. By further adjusting the ratio of the peak intensity I₃₁₁ of the (311) crystal plane peak to the peak intensity I₀₁₁ of the (011) crystal plane peak as satisfying 0.008 ≤ I₃₁₁/I₀₁₁ ≤ 0.037, it facilitates enabling the battery to have a long cycle life, a high energy density, and good kinetic performance.

Optionally, 0.009 ≤ I₃₁₁/I₀₁₁ ≤ 0.037, 0.009 ≤ I₃₁₁/I₀₁₁ ≤ 0.034, 0.012 ≤ I₃₁₁/I₀₁₁ ≤ 0.024, 0.012 ≤ I₃₁₁/I₀₁₁ ≤ 0.022, 0.012 ≤ I₃₁₁/I₀₁₁ ≤ 0.021, 0.013 ≤ I₃₁₁/I₀₁₁ ≤ 0.020, or 0.013 ≤ I₃₁₁/I₀₁₁ ≤ 0.018. In this way, the battery may be enabled to have a long cycle life, a high energy density, and good kinetic performance.

In some embodiments, at least part of a surface of the lithium-containing phosphate has a carbon coating layer thereon.

In some embodiments, the weight content of the carbon coating layer is denoted as m, and based on the total weight of the positive electrode active material, a specific surface area of the positive electrode active material is denoted as A, with the unit of m²/g, 5.0 ≤ A/(100×m) ≤ 9.0.

A/(100×m) has the following meaning: when the weight content m of the carbon coating layer is 1.0% and the specific surface area A of the positive electrode active material is 5 m²/g, A/(100×m) = 5÷(100×1.0%) = 5.

The carbon coating layer in the positive electrode active material provided in the embodiments of the present application may provide a good conductive network, improving electronic conductivity of the lithium-containing phosphate, and may also play a role of over-coating a lithium-containing phosphate body, so that a part of the initial capacity of the positive electrode active material can be hidden, enabling the positive electrode active material to play a role of a capacity sustained-release agent.

A/(100×m) may reflect a density of the carbon coating layer. When A/(100×m) is small, the positive electrode active material has poor kinetic performance, and the battery may have a high internal resistance. When A/(100×m) is large, the initial capacity of the positive electrode active material may be fully used during initial full charge, resulting in a poor effect of the positive electrode active material playing a role of a capacity sustained-release agent, thereby making the improvement to cycle performance of the battery insufficiently excellent. The inventor has found from research that, by adjusting the weight content m of the carbon coating layer and the specific surface area A of the positive electrode active material as satisfying 5.0 ≤ A/(100×m) ≤ 9.0, the positive electrode active material may have a high initial capacity and good kinetic performance, and may play a better role of a capacity sustained-release agent, making the battery using the positive electrode active material to have a long cycle life, a high energy density, and good kinetic performance.

Optionally, 6.4 ≤ A/(100×m) ≤ 8.2, 7.1 ≤ A/(100×m) ≤ 8.2, or 7.2 ≤ A/(100×m) ≤ 8.0. In this way, the battery may be better enabled to have a long cycle life, a high energy density, and good kinetic performance.

In some embodiments, the weight content m of the carbon coating layer satisfies 1.0% ≤ m ≤ 3.4%, optionally, 1.2% ≤ m ≤ 2.0%. When the weight content m of the carbon coating layer is within the range described above, the carbon coating layer may better coat a lithium-containing phosphate body, playing a role of over-coating the lithium-containing phosphate body. Therefore, a part of an initial capacity of the positive electrode active material can be hidden, enabling the positive electrode active material to play a role of a capacity sustained-release agent.

The weight content m of the carbon coating layer may be tested using a carbon sulfur analyzer, and a test standard may refer to GB/T 20123-2006.

In some embodiments, the positive electrode active material is of a single-crystalline structure or a single-crystalline-like structure.

In the present application, the term "single-crystalline-like" refers to a particle formed by agglomerating a few primary particles (for example, no more than 10 primary particles).

The carbon coating layer of the positive electrode active material of the single-crystalline-like structure includes both a carbon coating layer on an entire outer surface of the lithium-containing phosphate and a carbon coating layer on surfaces of the primary particles constituting the single-crystalline-like particle. Therefore, the weight content m of the carbon coating layer refers to a total weight content of the carbon coating layer at different positions in the positive electrode active material.

In some embodiments, the specific surface area A of the positive electrode active material satisfies A ≤ 18.5 m²/g, optionally, A ≤ 13.5 m²/g, 5 m²/g ≤ A ≤ 13.5 m²/g, 7.6 m²/g ≤ A ≤ 13.5 m²/g, 8.8 m²/g ≤ A ≤ 13.5 m²/g, or 9.0 m²/g ≤ A ≤ 13.1 m²/g. When the specific surface area of the positive electrode active material is within the range described above, machining performance of a positive electrode paste and a positive electrode sheet may be improved, thereby reducing the problems of excessive adhesion of the paste and cracking of a coating.

The specific surface area of the positive electrode active material has a meaning well known in the art, and may be measured using an instrument or a method known in the art. For example, with reference to GB/T 19587-2017, the specific surface area is obtained by performing a test using a specific surface area analysis and test method based on nitrogen adsorption and performing calculation using a Brunauer Emmett Teller (BET) method. A test instrument may be a Tri-Star 3020 specific surface area pore size analysis tester from Micromeritics, USA.

In some embodiments, a volume distribution particle size Dv50 of the positive electrode active material is 0.6 µm to 2.5 µm, optionally 0.7 µm to 2.3 µm or 1.0 µm to 2.0 µm. When the volume distribution particle size Dv50 of the positive active material is within the range described above, the positive active material may have good ion transportation performance, enabling the battery to have good power performance, and the machining performance of the positive electrode paste and the positive electrode sheet may be improved, for example, the problems of excessive adhesion of the paste and cracking of a coating may be reduced.

The Dv50 of the positive electrode active material has a meaning well known in the art, and may be measured using an instrument or a method known in the art. For example, Dv50 may be readily measured with reference to GB/T 19077-2016, using a laser particle size analyzer (e.g., Malvern Mastersizer 3000). The physical definition of Dv50 is a corresponding particle size when a cumulative volume distribution percentage of the material reaches 50%.

In some embodiments, a powder resistivity of the positive electrode active material at 25°C is denoted as δ, δ ≤ 20 Ω.cm, optionally, δ ≤ 12.1 Ω.cm, 1.2 Ω.cm ≤ δ ≤ 12.1 Ω.cm, 3.9 Ω.cm ≤ δ ≤ 12.1 Ω.cm, 5.5 Ω.cm ≤ δ ≤ 11.1 Ω.cm, 5.5 Ω.cm ≤ δ ≤ 10.0 Ω.cm, or 5.5 Ω.cm ≤ δ ≤ 9.1 Ω.cm. When the powder resistivity of the positive electrode active material is within the range described above, electronic conductivity of the lithium-containing phosphate may be improved, and hydrophilicity of the lithium-containing phosphate may be degraded, reducing moisture adsorption, and thereby further improving the cycle performance of the battery.

The powder resistivity of the positive electrode active material has a meaning well known in the art, and may be measured using an instrument or a method known in the art. For example, the powder resistivity may be tested with reference to GB/T 32993-2016. A test temperature is 25°C.

In some embodiments, the lithium-containing phosphate may have an olivine structure.

In some embodiments, the lithium-containing phosphate includes one or more of lithium iron phosphate (LiFePO₄) and a doping-modified compound thereof.

In some embodiments, the lithium-containing phosphate may include a material having a molecular formula of LiₘAₓFe_{1-y}B_{y}P_{1-z}C_{z}O₄₋ₙDₙ, where A includes one or more elements of Zn, Al, Na, K, and Mg, B includes one or more elements of Cu, Mn, Cr, Zn, Pb, Ca, Co, Ni, Sr, Nb, and Ti, C includes one or more elements of B, S, Si, and N, and D includes one or more elements of S, F, Cl, and Br; m is selected from a range of 0.5 to 1.15, optionally selected from a range of 0.95 to 1.05; x is selected from a range of 0 to 0.1, optionally selected from a range of 0.001 to 0.005; y is selected from a range of 0 to 0.5, optionally selected from a range of 0.001 to 0.1; z is selected from a range of 0 to 0.5, optionally selected from a range of 0.001 to 0.1; and n is selected from a range of 0 to 0.5, optionally selected from a range of 0.001 to 0.1. Values of m, x, y, z, and n need to ensure that the lithium-containing phosphate is electrically neutral.

Deintercalation and consumption of Li occur during charge and discharge of the battery, and the molar content of Li generally varies when the battery is discharged to different states. In the enumeration of the lithium-containing phosphate in the embodiments of the present application, the molar content of Li is a molar content of the lithium-containing phosphate in an initial state. In applications of the positive electrode active material to a battery system, the molar content of Li generally varies after charge and discharge cycles.

### [Preparation method]

The embodiments of the present application further provide a preparation method for a positive electrode active material.

The method includes the following steps: providing a precursor for a lithium-containing phosphate; grinding the precursor for the lithium-containing phosphate and a carbon source; and increasing the temperature of a ground material to a first temperature T1 at a first rate in a protective gas atmosphere, maintaining the temperature at the first temperature T1 for a first time t1, then increasing the temperature to a second temperature T2 at a second rate, and maintaining the temperature at the second temperature T2 for a second time t2, so as to obtain a positive electrode active material. The positive electrode active material includes a lithium-containing phosphate, and an X-ray diffraction pattern of the positive electrode active material tested in a fully charged state satisfies: there is a (311) crystal plane peak in a range of 35° to 36° and a (011) crystal plane peak in a range of 20° to 21°, and the ratio of a peak intensity I₃₁₁ of the (311) crystal plane peak to a peak intensity I₀₁₁ of the (011) crystal plane peak satisfies I₃₁₁/I₀₁₁ ≥ 0.008.

In some embodiments, the first rate is less than or equal to 4 °C/min. By adjusting the first rate as being within the range described above, a dense and uniform carbon coating layer can be formed, so that a part of an initial capacity of the positive electrode active material can be hidden, enabling the positive electrode active material to play a role of a capacity sustained-release agent, thereby making a battery using the positive electrode active material have a long cycle life.

When the first rate is greater than 4 °C/min, the carbon coating layer has poor density and uniformity, resulting in full contact between the lithium-containing phosphate and an electrolyte in an initial state. In this case, the X-ray diffraction pattern of the positive electrode active material tested in the fully charged state does not have the (311) crystal plane peak in the range of 35° to 36°, and the initial capacity of the positive electrode active material may be fully used. Therefore, it is hard for the positive electrode active material to play a role of a capacity sustained-release agent, thereby making it hard to enable the battery using the positive electrode active material to have a long cycle life.

In some embodiments, the first rate may be 1°C/min to 4 °C/min, optionally 1.5 °C/min to 3.5 °C/min, 1.5 °C/min to 3 °C/min, or 1.5 °C/min to 2.5 °C/min. By further adjusting the first rate as being within the range described above, the positive electrode active material may play a role of a capacity sustained-release agent, and a positive electrode active material particle may have an appropriate primary particle (the primary particle herein is a primary particle of a single-crystalline-like particle) size, enabling the positive electrode active material to have good kinetic performance, thereby making the battery using the positive electrode active material have a long cycle life, good kinetic performance, and high energy conversion efficiency.

In some embodiments, the first temperature T1 is greater than or equal to 400°C. By adjusting the first temperature T1 as being within the range described above, the carbon source may fully decompose to result in carbon.

In some embodiments, the first temperature T1 may be 400°C to 600°C, optionally 450°C to 550°C. By adjusting the first temperature T1 as being within the range described above, the carbon source may fully decompose to result in carbon, and a positive electrode active material particle may have a uniform primary particle (the primary particle herein is a primary particle of a single-crystalline-like particle) size, enabling the positive electrode active material to better play a role of a capacity sustained-release agent, thereby making the battery using the positive electrode active material have a long cycle life.

In some embodiments, the first time t1 is greater than or equal to 1 h. By adjusting the first time t1 as being within the range described above, a positive electrode active material particle may have an appropriate and uniform primary particle (the primary particle herein is a primary particle of a single-crystalline-like particle) size, so that a part of the initial capacity of the positive electrode active material can be hidden, enabling the positive electrode active material to play a role of a capacity sustained-release agent, thereby making the battery using the positive electrode active material have a long cycle life.

When the first time t1 is less than 1 h or is 0, the size of the primary particle forming the positive electrode active material particle is too small, making full use of the initial capacity of the prepared positive electrode active material, so that the X-ray diffraction pattern of the positive electrode active material tested in the fully charged state does not have the (311) crystal plane peak in the range of 35° to 36°. Therefore, it is hard for the positive electrode active material to play a role of a capacity sustained-release agent, thereby making it hard to enable the battery using the positive electrode active material to have a long cycle life.

In some embodiments, the first time t1 may be 1 h to 7 h, optionally 3 h to 5 h. By further adjusting the first time t1 as being within the range described above, the positive electrode active material may play a role of a capacity sustained-release agent, and a positive electrode active material particle may have an appropriate primary particle (the primary particle herein is a primary particle of a single-crystalline-like particle) size, enabling the positive electrode active material to have good kinetic performance, thereby making the battery using the positive electrode active material have a long cycle life, good kinetic performance, and high energy conversion efficiency.

In some embodiments, the second temperature T2 is greater than or equal to 720°C. By adjusting the second temperature T2 as being within the range described above, a positive electrode active material particle may have an appropriate primary particle (the primary particle herein is a primary particle of a single-crystalline-like particle) size, so that a part of the initial capacity of the positive electrode active material can be hidden, enabling the positive electrode active material to play a role of a capacity sustained-release agent, thereby making the battery using the positive electrode active material have a long cycle life.

When the second temperature T2 is less than 720°C, the size of the primary particle forming the positive electrode active material particle is too small, making full use of the initial capacity of the prepared positive electrode active material, so that the X-ray diffraction pattern of the positive electrode active material tested in the fully charged state does not have the (311) crystal plane peak in the range of 35° to 36°. Therefore, it is hard for the positive electrode active material to play a role of a capacity sustained-release agent, thereby making it hard to enable the battery using the positive electrode active material to have a long cycle life. Meanwhile, when the second temperature T2 is less than 720°C, the carbon coating layer formed on a surface of the lithium-containing phosphate has a relatively low degree of graphitization, resulting in relatively poor electronic conductivity, thereby reducing kinetic performance and energy conversion efficiency of the positive electrode active material and the battery.

The second temperature T2 should not be too high. When the second temperature T2 is relatively high, the size of the primary particle (the primary particle herein is a primary particle of a single-crystalline-like particle) forming the positive electrode active material particle is relatively large, thereby reducing the kinetic performance of the positive electrode active material and the battery. In some embodiments, the second temperature T2 may be 720°C to 850°C, optionally 750°C to 810°C. By further adjusting the second temperature T2 as being within the range described above, a positive electrode active material particle may have an appropriate primary particle (the primary particle herein is a primary particle of a single-crystalline-like particle) size, enabling the positive electrode active material to have good kinetic performance and to play a role of a capacity sustained-release agent, thereby making the battery using the positive electrode active material have a long cycle life, good kinetic performance, and high energy conversion efficiency.

In some embodiments, the second rate may be 1 °C/min to 10 °C/min, optionally 5 °C/min to 9 °C/min. In this way, a positive electrode active material particle may have an appropriate primary particle (the primary particle herein is a primary particle of a single-crystalline-like particle) size, enabling the positive electrode active material to have good kinetic performance and to play a role of a capacity sustained-release agent.

In some embodiments, the first rate may be 1 °C/min to 4 °C/min, and second rate may be 5 °C/min to 9 °C/min.

In some embodiments, the second time t2 may be 5 h to 20 h, optionally 8 h to 15 h. In this way, a positive electrode active material particle may have an appropriate primary particle (the primary particle herein is a primary particle of a single-crystalline-like particle) size, enabling the positive electrode active material to have good kinetic performance and to play a role of a capacity sustained-release agent.

In some embodiments, the carbon source includes a first carbon source including a water-soluble polymer. When the first carbon source includes a water-soluble polymer, the water-soluble polymer may fully coat the precursor for the lithium-containing phosphate, making the formed carbon coating layer more uniform and dense, which facilitates hiding a part of an initial capacity of the positive electrode active material, enabling the positive electrode active material to play a role of a capacity sustained-release agent.

In some embodiments, the water-soluble polymer may include one or more of polyethylene glycol, polyaniline, and respective derivatives thereof. A derivative generally refers to a product derived by replacing a hydrogen atom or an atomic group in a compound with another atom or atomic group.

When the water-soluble polymer is within the range described above, electronic conductivity of the lithium-containing phosphate may be improved, and the specific surface area of the prepared positive electrode active material may be reduced, making the formed carbon coating layer more uniform and dense, which facilitates hiding a part of an initial capacity of the positive electrode active material, enabling the positive electrode active material to play a role of a capacity sustained-release agent.

In some embodiments, the weight content of the first carbon source may be ≥ 50%, based on the total weight of the carbon source. When the weight content of the first carbon source is within the range described above, the obtained carbon coating layer may be more uniform and dense, which facilitates hiding a part of the initial capacity of the positive electrode active material, enabling the positive electrode active material to play a role of a capacity sustained-release agent.

When the weight content of the first carbon source is less than 50%, the formed carbon coating layer has a poor density, resulting in full contact between the lithium-containing phosphate and the electrolyte in the initial state. In this case, the X-ray diffraction pattern of the positive electrode active material tested in the fully charged state does not have the (311) crystal plane peak in the range of 35° to 36°, and the initial capacity of the positive electrode active material may be fully used. Therefore, it is hard for the positive electrode active material to play a role of a capacity sustained-release agent, thereby making it hard to enable the battery using the positive electrode active material to have a long cycle life.

In some embodiments, the weight content of the first carbon source may be 50% to 70%, based on the total weight of the carbon source. When the weight content of the first carbon source is relatively large, a large part of the initial capacity of the positive electrode active material is hidden in the initial fully-charged state, thereby improving the cycle life of the battery. However, the initial capacity of the positive electrode active material is reduced, and a lithium ion transmission rate of the positive electrode active material is also reduced, thereby affecting an energy density and kinetic performance of the battery. By further adjusting the weight content of the first carbon source as being within the range described above, it facilitates enabling the battery to have a long cycle life, a high energy density, and good kinetic performance.

In some embodiments, the carbon source may further include a second carbon source that may include one or more of glucose, sucrose, lactose, and maltose.

In some embodiments, the weight content of the second carbon source may be ≤50%, optionally 30% to 50%, based on the total weight of the carbon source.

By further adjusting the weight content of the second carbon source as being within the range described above, it facilitates enabling the battery to have a long cycle life, a high energy density, and good kinetic performance, and also facilitates reducing the raw material cost of the battery.

The amount of the added carbon source may be calculated based on a carbon residue value (corresponding to the weight of the carbon coating layer in the positive electrode active material) of the carbon source. In some embodiments, the weight content m (i.e., the weight content of residual carbon of the carbon source) of the carbon coating layer satisfies 1.0% ≤ m ≤ 3.4%, optionally, 1.2% ≤ m ≤ 2.0%.

In some embodiments, the precursor for the lithium-containing phosphate may be a mixture of various raw materials required for preparing the lithium-containing phosphate, for example, it may include a lithium source, a metal source (such as an iron source), a phosphorus source, optionally various doping element (such as A, B, C, and D) sources, etc.

In some embodiments, the lithium source may include one or more of lithium hydroxide, lithium carbonate, lithium phosphate, lithium oxalate, and lithium acetate.

The metal source may include one or more of an oxide, a hydroxide, a halide, a phosphate, an oxalate, a sulfate, a carbonate, and a nitrate of a metal element.

The phosphorus source may include one or more of phosphoric acid, ammonium dihydrogen phosphate, diammonium hydrogen phosphate, ammonium phosphate, and iron phosphate.

The doping element source may include various compounds containing a doping element.

In some embodiments, iron phosphate (FePO₄) may be used as an iron source and a phosphorus source.

In some embodiments, in the step of grinding the precursor for the lithium-containing phosphate and the carbon source, a solvent, such as one or a mixture of water, ethanol, and propanol, may also be added.

In some embodiments, after the precursor for the lithium-containing phosphate and the carbon source are ground, spray drying may be further performed, then the temperature of a spray-dried powder may be increased to the first temperature T1 at the first rate and maintained at the first temperature T1 for the first time t1, and then the temperature is increased to the second temperature T2 at the second rate and maintained at the second temperature T2 for the second time t2, so as to obtain the positive electrode active material.

In some embodiments, the protective gas may include one or more of nitrogen, argon, and helium.

In some embodiments, milling treatment may also be performed on the obtained positive electrode active material. The milling treatment may be jet milling.

In some embodiments, the method includes the following steps: providing the precursor for the lithium-containing phosphate; grinding the precursor for the lithium-containing phosphate and the carbon source, where the carbon source includes the first carbon source including one or more of polyethylene glycol, polyaniline, and respective derivatives thereof, and the weight content of the first carbon source is ≥ 50%, based on the total weight of the carbon source; and increasing the temperature of the ground material to a temperature of 400°C to 600°C at a rate of 1 °C/min to 4 °C/min in the protective gas atmosphere, maintaining the temperature at this temperature for 1 h to 7 h, then increasing the temperature to a temperature of 720°C to 850°C at a rate of 5 °C/min to 9 °C/min, and maintaining the temperature at this temperature for 5 h to 20 h, so as to obtain the positive electrode active material. In this way, the battery using the positive electrode active material may have a long cycle life, good kinetics performance, a high energy density, and high energy conversion efficiency.

The positive electrode active material provided in the embodiments of the present application may be prepared using the method provided in the embodiments of the present application, and other parameters of the prepared positive electrode active material may refer to the positive electrode active material as described above, which are no longer repeated herein.

### [Positive electrode sheet]

The positive electrode sheet provided in the embodiments of the present application includes a positive electrode current collector and a positive electrode film layer disposed on at least one surface of the positive electrode current collector. The positive electrode film layer includes the positive electrode active material as described above or the positive electrode active material prepared by the method as described above.

The positive electrode current collector has two surfaces opposite in a thickness direction thereof, and the positive electrode film layer is disposed on either one or both of the two opposite surfaces of the positive electrode current collector.

In some embodiments, the positive electrode film layer may further include another positive electrode active material, in addition to the positive electrode active material as described above or the positive electrode active material prepared by the method as described above, for example, it may further include a lithium transition metal oxide, which is not limited in the embodiments of the present application.

In some embodiments, the positive electrode film layer optionally further includes a positive electrode conductive agent. The type of the positive electrode conductive agent is not particularly limited in the present application. In some embodiments, as an example, the positive electrode conductive agent may include one or more of superconducting carbon, conductive graphite, acetylene black, carbon black, ketjen black, carbon dot, carbon nanotube, graphene, and carbon nanofiber.

In some embodiments, the positive electrode film layer optionally further includes a positive electrode binder. The type of the positive electrode binder is not particularly limited in the present application. In some embodiments, as an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may be metal foil or a composite current collector. As an example of the metal foil, aluminum foil may be used. The composite current collector may include a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

The positive electrode film layer is generally formed by applying a positive electrode paste on the positive electrode current collector, followed by drying and cold pressing. The positive electrode paste is generally formed by dispersing a positive electrode active material, a positive electrode binder, a positive electrode conductive agent, etc. in a solvent and mixing them well. The solvent may be N-methylpyrrolidone (NMP) or de-ionized water, but is not limited thereto.

### [Negative electrode sheet]

The battery cell includes a positive electrode sheet.

In some embodiments, the negative electrode sheet includes a negative electrode current collector and a negative electrode film layer disposed on at least one surface of the negative electrode current collector, the negative electrode film layer including a negative electrode active material.

The negative electrode current collector has two surfaces opposite in a thickness direction thereof, and the negative electrode film layer is disposed on either one or both of the two opposite surfaces of the negative electrode current collector.

In some embodiments, the negative electrode current collector may be metal foil or a composite current collector. For example, copper foil may be used as the metal foil. The composite current collector may include a polymer material base layer and a metal layer formed on at least one surface of a polymer material substrate. The composite current collector may be formed by forming a metal material (such as copper, a copper alloy, nickel, a nickel alloy, titanium, a titanium alloy, silver, or a silver alloy) on the polymer material substrate (such as a substrate of polypropylene (PP), polyethylene terephthalate (PET), polybutylene terephthalate (PBT), polystyrene (PS), or polyethylene (PE)).

In one embodiment, the negative electrode active material may be a material well known in the art. As an example, the negative electrode active material may include one ore more of the following materials: synthetic graphite, natural graphite, soft carbon, hard carbon, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials, and another conventional material that can be used as a negative electrode active material may also be used. One of these negative electrode active materials may be used alone, or a combination of two or more of these negative electrode active materials may be used.

In some embodiments, the negative electrode film layer optionally further includes a negative electrode binder. As an example, the binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS).

In some embodiments, the negative electrode film layer optionally further includes a negative electrode conductive agent. As an example, the conductive agent may include at least one or more of superconducting carbon, acetylene black, carbon black, ketjen black, carbon dots, carbon nanotubes, graphene, and carbon nanofibers.

In some embodiments, the negative electrode film layer further optionally includes another auxiliary agent, for example, a thickening agent (such as sodium carboxymethyl cellulose (CMC)), etc.

In some embodiments, the negative electrode sheet may be prepared in the following manner: dispersing the above-mentioned components for preparing the negative electrode sheet, for example, the negative electrode active material, the negative electrode conductive agent, the negative electrode binder, and any other component in a solvent (e.g., deionized water) to form a negative electrode paste; and applying the negative electrode paste on the negative electrode current collector, followed by procedures such as drying and cold pressing, to obtain the negative electrode sheet.

The negative electrode sheet does not exclude other additional functional layers in addition to the negative electrode film layer. For example, in some embodiments, the negative electrode sheet further includes a conductive undercoating layer (for example, including a conductive agent and a binder) sandwiched between the negative electrode current collector and the negative electrode film layer and disposed on the surface of the negative electrode current collector. In some embodiments, the negative electrode sheet may further include a protective layer covering a surface of the negative electrode film layer.

### [Electrolyte]

The battery cell further includes an electrolyte. The electrolyte functions to transport ions between the positive electrode sheet and the negative electrode sheet. The type of the electrolyte is not specifically limited in the present application and may be selected according to a demand. For example, the electrolyte may include one or more of a solid electrolyte, a gel electrolyte, and a liquid electrolyte (i.e., an electrolyte solution).

In some embodiments, the electrolyte is an electrolyte solution including an electrolyte salt and a solvent.

The type of the electrolyte salt is not specifically limited and may be selected according to an actual demand. In some embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro (oxalato) borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

The type of the solvent is not specifically limited and may be selected according to an actual demand. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some embodiments, the electrolyte solution optionally further includes an additive. For example, the additive may include a negative electrode film-forming additive or a positive electrode film-forming additive, and may further include an additive capable of improving some performance of a battery, for example, an additive for improving overcharge performance of a battery, an additive for improving high-temperature performance of a battery, an additive for improving low-temperature power performance of a battery, etc.

### [Separator]

The battery cell may further include a separator. In some embodiments, the separator may be disposed between the positive electrode sheet and the negative electrode sheet, and primarily functions to prevent an internal short circuit. The type of the separator is not particularly limited, and any well-known film with a porous structure and having good chemical stability and mechanical stability may be selected.

In some embodiments, a material of the separator may include one or more of glass fiber, non-woven fabric, polyethylene, polypropylene, polyvinylidene fluoride, and polyimide. The separator may be a single-layer thin film or a multilayer composite thin film. When the separator is a multilayer composite thin film, materials of all the layers are the same or different.

A preparation method for the battery cell is well known. In some embodiments, the positive electrode sheet, the separator, the negative electrode sheet, and the electrolyte may be assembled to form a battery cell. As an example, the positive electrode sheet, the separator, and the negative electrode sheet may form an electrode assembly through a winding process and/or a lamination process, and the electrode assembly is placed in an outer package, into which an electrolyte is injected after drying, followed by processes such as vacuum packaging, standing, and formation, so as to obtain the battery cell. A plurality of battery cells may be further connected in series, in parallel, or in parallel-series to form a battery module. A plurality of battery modules may also be connected in series, in parallel, or in parallel-series to form a battery pack. In some embodiments, a plurality of battery cells may also directly form a battery pack.

The embodiments of the present application further provide an electric device including the battery provided in the embodiments of the present application. The battery may be used as a power supply for the electric device, or as an energy storage unit for the electric device. The electric device may include, but is not limited to, a mobile apparatus (e.g., a cell phone, a tablet computer, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

The type of the battery of the electric device may be selected according to a use demand, for example, a battery cell, a battery module, or a battery pack.

FIG. 6 is a schematic diagram of an electric device as an example. The electric device is a pure electric vehicle, a hybrid electric vehicle, a plug-in hybrid electric vehicle, or the like. To satisfy the demands for high power and high energy density of the electric device, a battery pack or a battery module may be used.

As another example, the electric device may be a cell phone, a tablet computer, a notebook computer, or the like. The electric device is generally required to be light and thin, and may use a battery cell as a power supply.

### Examples

The following examples describe the disclosure of the present application more specifically. These examples are used only for illustration, since various modifications and changes made within the scope of the disclosure of the present application are obvious to those skilled in the art. Unless otherwise stated, all parts, percentages, and ratios reported in the following examples are based on a weight. All reagents used in the examples are commercially available or can be synthesized according to conventional methods, and can be used directly without further treatment. All instruments used in the examples are commercially available.

### Example 1

### (1) Preparation of a positive electrode active material

FePO₄, Li₂ CO₃, glucose, and polyethylene glycol were mixed well, a small amount of water was added, and the mixture was ground and spray dried; the spray-dried powder was placed in a sintering furnace, the temperature thereof was increased from 25°C to 500°C (first temperature T1) at a rate of 2 °C/min (first rate) in a nitrogen atmosphere and maintained at this temperature for 3 h (first time t1), then the temperature thereof was increased to 780°C (second temperature T2) at a rate of 5 °C/min (second rate) and maintained at this temperature for 10 h (second time t2), followed by a temperature reduction, and jet milling was performed to obtain the positive electrode active material, i.e., carbon-coated LiFePO4₄.

A carbon source was a mixture of glucose and polyethylene glycol at a mass ratio of 5:5, and the carbon source was added in an amount such that the weight content (i.e., the weight content m of a carbon coating layer) of residual carbon of the carbon source was 1.29%, based on the total weight of the prepared positive electrode active material.

### (2) Preparation of a battery

The above positive electrode active material, carbon black SP, and polyvinylidene fluoride (PVDF) were mixed well in an N-methylpyrrolidone solvent system at a weight ratio of 92:2.5:5.5, and then the mixture was applied on aluminum foil, dried, and cold-pressed to obtain a positive electrode sheet.

Graphite, which is a negative electrode active material, acetylene black, styrene-butadiene rubber (SBR), and sodium carboxymethyl cellulose (CMC) were mixed well in deionized water at a weight ratio of 95:2:2:1, and then the mixture was applied on copper foil, dried, and cold-pressed to obtain a negative electrode sheet.

Ethylene carbonate (EC), diethyl carbonate (DEC), and ethyl methyl carbonate (EMC) were mixed at a volume ratio of 1:1:1 to obtain an organic solvent, and then fully-dried LiPF₆ was dissolved in the organic solvent to prepare an electrolyte solution with a concentration of 1 mol/L.

A polyethylene (PE) porous polymerized thin film was used as a separator, the positive electrode sheet, the separator, and the negative electrode sheet were stacked in sequence, with the separator being located between a positive electrode and a negative electrode for separation, and winding was performed to obtain an electrode assembly. The electrode assembly was placed in an outer package, into which the electrolyte solution was injected, and then packaging was performed, followed by a process such as formation, so as to obtain the battery.

### [Examples 2-14 and Comparative Examples 1-5]

A preparation method for a battery is similar to that of Example 1, except that parameters for preparing a positive electrode active material are different, which are shown in detail in Table 1. In Table 1, m represents the weight content of the carbon coating layer (residual carbon of the carbon source) based on the total weight of the prepared positive electrode active material, and the first time t1 being 0 represents that the temperature is not maintained at the first temperature.

### Performance tests:

### (1) X-Ray diffraction analysis for the positive electrode active material

At 25°C, the prepared battery was charged to 3.65 V with a constant current of 1C, and then charged to a current of 0.05C with a constant voltage, in which case the battery was in a fully charged state; and then the positive electrode sheet was detached from the fully charged battery and tested with an X-ray diffractometer. The positive electrode active material in the fully charged state corresponds to the battery in the fully charged state, and the positive electrode active material is in a lithium deintercalation state.

In an X-ray diffraction analysis test, a copper target is used as an anode target, a CuK α-ray is used as a radiation source, a ray wavelength is λ = 1.5418 Å, a scanning 20 angle range is 15° to 45°, and a scanning rate is 2 °/min. A test instrument may be a Bruker D8 Discover X-ray diffraction analyzer.

In an obtained X-ray diffraction pattern, there are a (311) crystal plane peak (LiFePO₄ phase) in a range of 35° to 36° and a (011) crystal plane peak (FePO₄ phase) in a range of 20° to 21°, and I₃₁₁/I₀₁₁ represents the ratio of a peak height of the (311) crystal plane peak to a peak height of the (011) crystal plane peak.

### (2) Test for cycle performance of the battery

At 25°C, the prepared battery was left to stand for 30 min and then subjected to the following test. The battery was charged to 3.65 V with a constant power of 0.5P; and after being left to stand for 10 min, the battery was discharged to 2.5 V with a constant power of 0.5P. The above steps were repeated until a discharge capacity of the battery was attenuated to 90% of a first-cycle discharge capacity of the battery, and the number of cycles of the battery was recorded.

### (3) Test for initial direct-current internal resistance of the battery

At 25°C, the prepared battery was charged to 3.65 V with a constant current of 0.5C, and then charged to a current of 0.05C with a constant voltage; then the battery was discharged with a constant current of 0.5C for 60 min to adjust the battery to 50% SOC, in which case a voltage of the battery was denoted as U1; and the battery was discharged with a constant current of 1C for 30 seconds, where sampling was performed every 0.1 second, and a voltage at the end of discharge was denoted as U2. The initial direct-current internal resistance DCR of the battery is represented by a discharge DCR of the battery at 50% SOC, where DCR = (U1-U2)/1C.

Table 2 shows test results of the above Examples and Comparative examples.

In Table 2, A represents a specific surface area of the prepared positive electrode active material, with the unit of m²/g; and δ represents a powder resistivity of the prepared positive electrode active material at 25°C, with the unit of Ω.cm. The specific surface area and the powder resistivity at 25°C of the positive electrode active material may be tested according to the test methods provided in the specification.

**Table 1**

| No. | Carbon source composition and mass ratio | First rate (°C/min) | First Temperature T1 (°C) | First Time t1 (h) | Second rate (°C/min) | Second Temperature T2 (°C) | Second Time t2 (h) | Weight content m of the carbon coating layer |
|---|---|---|---|---|---|---|---|---|
| Example 1 | Glucose:Polyethylene glycol = 5:5 | 2 | 500 | 3 | 5 | 780 | 10 | 1.29% |
| Example 2 | Sucrose:Polyethylene glycol = 3:7 | 2 | 500 | 3 | 5 | 780 | 10 | 1.28% |
| Example 3 | Polyethylene glycol | 2 | 500 | 3 | 5 | 780 | 10 | 1.26% |
| Example 4 | Glucose:Polyethylene glycol = 5:5 | 2 | 500 | 3 | 5 | 780 | 10 | 1.64% |
| Example 5 | Glucose:Polyethylene glycol = 5:5 | 2 | 500 | 3 | 5 | 780 | 10 | 1.83% |
| Example 6 | Glucose:Polyethylene glycol = 5:5 | 2 | 500 | 3 | 5 | 780 | 10 | 3.37% |
| Example 7 | Sucrose:Polyethylene glycol = 3:7 | 2 | 500 | 3 | 5 | 750 | 10 | 1.30% |
| Example 8 | Sucrose:Polyethylene glycol = 3:7 | 2 | 500 | 3 | 5 | 810 | 10 | 1.22% |
| Example 9 | Sucrose:Polyethylene glycol = 3:7 | 2 | 500 | 3 | 5 | 850 | 10 | 1.19% |
| Example 10 | Sucrose:Polyethylene glycol = 3:7 | 1 | 500 | 3 | 5 | 780 | 10 | 1.30% |
| Example 11 | Sucrose:Polyethylene glycol = 3:7 | 4 | 500 | 3 | 5 | 780 | 10 | 1.27% |
| Example 12 | Sucrose:Polyethylene glycol = 3:7 | 2 | 500 | 1 | 5 | 780 | 10 | 1.28% |
| Example 13 | Sucrose:Polyethylene glycol = 3:7 | 2 | 500 | 5 | 5 | 780 | 10 | 1.27% |
| Example 14 | Sucrose:Polyethylene glycol = 3:7 | 2 | 500 | 7 | 5 | 780 | 10 | 1.25% |
| Comparative Example 1 | Glucose:Polyethylene glycol = 7:3 | 2 | 500 | 3 | 5 | 780 | 10 | 1.27% |
| Comparative Example 2 | Glucose | 2 | 500 | 3 | 5 | 780 | 10 | 1.32% |
| Comparative Example 3 | Sucrose: Polyethylene glycol = 5:5 | 6 | 500 | 3 | 5 | 780 | 10 | 1.21% |
| Comparative Example 4 | Sucrose: Polyethylene glycol = 5:5 | 2 | 500 | 0 | 5 | 780 | 10 | 1.30% |
| Comparative Example 5 | Sucrose: Polyethylene glycol = 3:7 | 2 | 500 | 3 | 5 | 700 | 10 | 1.37% |

**Table 2**

| No. | Positive electrode active material | | | | | Number of cycles of the battery | Initial direct-current internal resistance DCR (mΩ) of the battery |
|---|---|---|---|---|---|---|---|
| | I₃₁₁/I₀₁₁ | Specific surface area A (m²/g) | A/(100×m) | Powder resistivity δ (Ω.cm) | Dv50 (µm) | | |
| Example 1 | 0.008 | 10.6 | 8.2 | 11.9 | 1.2 | 2759 | 32.0 |
| Example 2 | 0.015 | 9.7 | 7.6 | 9.1 | 1.9 | 3348 | 33.1 |
| Example 3 | 0.021 | 9.0 | 7.1 | 7.2 | 1.0 | 3902 | 34.5 |
| Example 4 | 0.013 | 13.1 | 8.0 | 5.5 | 1.1 | 3238 | 33.8 |
| Example 5 | 0.024 | 13.5 | 7.4 | 3.9 | 0.7 | 4008 | 35.1 |
| Example 6 | 0.037 | 18.5 | 5.5 | 1.2 | 1.7 | 4307 | 37.3 |
| Example 7 | 0.012 | 10.2 | 7.8 | 12.1 | 1.3 | 3115 | 32.8 |
| Example 8 | 0.022 | 8.8 | 7.2 | 8.3 | 2.0 | 3879 | 35.8 |
| Example 9 | 0.034 | 7.6 | 6.4 | 5.8 | 2.3 | 4298 | 38.7 |
| Example 10 | 0.018 | 9.3 | 7.2 | 8.5 | 1.8 | 3501 | 33.7 |
| Example 11 | 0.009 | 10.3 | 8.1 | 11.1 | 1.5 | 2803 | 32.4 |
| Example 12 | 0.012 | 9.9 | 7.7 | 10.0 | 1.4 | 3017 | 32.7 |
| Example 13 | 0.017 | 9.4 | 7.4 | 8.7 | 1.1 | 3502 | 33.8 |
| Example 14 | 0.018 | 9.0 | 7.2 | 7.8 | 1.2 | 3597 | 33.9 |
| Comparative Example 1 | 0 | 12.2 | 9.6 | 48.8 | 1.0 | 2013 | 31.6 |
| Comparative Example 2 | 0 | 14.3 | 10.8 | 32.0 | 1.3 | 2005 | 30.7 |
| Comparative Example 3 | 0 | 11.2 | 9.3 | 14.5 | 1.3 | 2002 | 31.5 |
| Comparative Example 4 | 0 | 11.9 | 9.2 | 14.1 | 1.4 | 2189 | 31.4 |
| Comparative Example 5 | 0 | 13.1 | 9.6 | 156.0 | 2.4 | 1970 | 39.7 |

It can be seen from the test results in Table 1 and Table 2 that for positive electrode active materials prepared in Comparative Examples 1 to 5, X-ray diffraction patterns thereof tested in fully charged states do not have a (311) crystal plane peak, in which case the positive electrode active materials do not have a capacity sustained-release effect, and batteries using the positive electrode active materials each have a short cycle life.

It can also be seen from the test results in Table 1 and Table 2 that, by adjusting the ratio of the peak intensity I₃₁₁ of the (311) crystal plane peak to the peak intensity I₀₁₁ of the (011) crystal plane peak in the X-ray diffraction pattern of the positive electrode active material tested in the fully charged state as satisfying I₃₁₁/I₀₁₁ ≥ 0.008, the battery may be enabled to have a long cycle life.

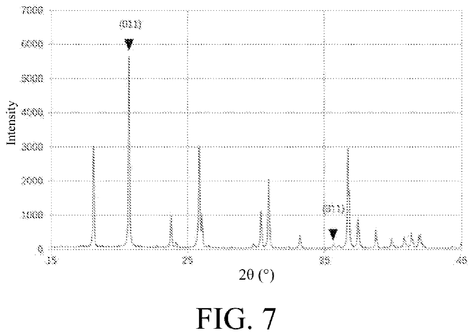

FIG. 7 is an X-ray diffraction pattern of a positive electrode sheet obtained by disassembling a battery prepared in Example 5 after the battery is fully charged. It can be seen from FIG. 7 that the X-ray diffraction pattern of the positive electrode active material tested in the fully charged state has the (311) crystal plane peak, and the ratio of the peak intensity I₃₁₁ of the (311) crystal plane peak to the peak intensity I₀₁₁ of the (011) crystal plane peak satisfies I₃₁₁/I₀₁₁ ≥ 0.008. It indicates that a part of lithium iron phosphate in the prepared positive electrode active material is subjected to no lithium deintercalation, the part of the lithium iron phosphate subjected to no lithium deintercalation may be gradually activated during battery cycling, and active lithium may be gradually deintercalated, enabling the positive electrode active material to play a role of a capacity sustained-release agent, thereby making the battery using the positive electrode active material have a long cycle life.

It can also be seen from the test results in Table 1 and Table 2 that, by adjusting the ratio of the peak intensity I₃₁₁ of the (311) crystal plane peak to the peak intensity I₀₁₁ of the (011) crystal plane peak in the X-ray diffraction pattern of the positive electrode active material tested in the fully charged state as further satisfying 0.012 ≤ I₃₁₁/I₀₁₁ ≤ 0.024, the battery may be enabled to have a longer cycle life while having a low internal resistance and good kinetics performance.

It should be noted that the present application is not limited to the above embodiments. The above embodiments are merely examples, and any embodiment having substantially the same composition as the technical concept and exhibiting the same functional effect within the scope of the technical solutions of the present application is included in the technical scope of the present application. In addition, various modifications that can be conceived by those skilled in the art and made to the embodiments without departing from the subject matter of the present application, and other manners constructed by combining some constituent elements in the embodiments are also included in the scope of the present application.

## Claims

1. A positive electrode active material, comprising a lithium-containing phosphate, wherein an X-ray diffraction pattern of the positive electrode active material tested in a fully charged state satisfies: there is a (311) crystal plane peak in a range of 35° to 36° and a (011) crystal plane peak in a range of 20° to 21°, and the ratio of a peak intensity I₃₁₁ of the (311) crystal plane peak to a peak intensity I₀₁₁ of the (011) crystal plane peak satisfies I₃₁₁/I₀₁₁ ≥ 0.008.

2. The positive electrode active material according to claim 1, wherein 0.009 ≤ I₃₁₁/I₀₁₁ ≤ 0.037, optionally 0.012 ≤ I₃₁₁/I₀₁₁ ≤ 0.024.

3. The positive electrode active material according to any one of claims 1 to 2, wherein at least part of a surface of the lithium-containing phosphate has a carbon coating layer thereon;
optionally, the weight content of the carbon coating layer is denoted as m, and based on the total weight of the positive electrode active material, a specific surface area of the positive electrode active material is denoted as A, with the unit of m²/g, 5.0 ≤ A/(100×m) ≤ 9.0, and more optionally, 6.4 ≤ A/(100×m) ≤ 8.2.

4. The positive electrode active material according to claim 3, wherein
1.0% ≤ m ≤ 3.4%, optionally, 1.2% ≤ m ≤2.0%; and/or
A ≤ 18.5 m²/g, optionally, A ≤ 13.5 m²/g.

5. The positive electrode active material according to any one of claims 1 to 4, wherein the positive electrode active material is of a single-crystalline structure or a single-crystalline-like structure.

6. The positive electrode active material according to any one of claims 1 to 5, wherein
a volume distribution particle size Dv50 of the positive electrode active material is 0.6 µm to 2.5 µm, optionally 0.7 µm to 2.3 µm ; and/or
a powder resistivity of the positive electrode active material at 25°C is denoted as δ, δ ≤ 20 Ω.cm, optionally, δ ≤ 12.1 Q.cm.

7. The positive electrode active material according to any one of claims 1 to 6, wherein the lithium-containing phosphate comprises one or more of lithium iron phosphate and a doping-modified compound thereof;
optionally, the lithium-containing phosphate comprises a material having a molecular formula of LiₘAₓFe_{1-y}B_{y}P_{1-z}C_{z}O₄₋ₙDₙ, wherein A comprises one or more elements of Zn, Al, Na, K, and Mg, B comprises one or more elements of Cu, Mn, Cr, Zn, Pb, Ca, Co, Ni, Sr, Nb, and Ti, C comprises one or more elements of B, S, Si, and N, and D comprises one or more elements of S, F, Cl, and Br; m is selected from a range of 0.5 to 1.15, optionally selected from a range of 0.95 to 1.05; x is selected from a range of 0 to 0.1, optionally selected from a range of 0.001 to 0.005; y is selected from a range of 0 to 0.5, optionally selected from a range of 0.001 to 0.1; z is selected from a range of 0 to 0.5, optionally selected from a range of 0.001 to 0.1; and n is selected from a range of 0 to 0.5, optionally selected from a range of 0.001 to 0.1.

8. A preparation method for a positive electrode active material, comprising the following steps:
providing a precursor for a lithium-containing phosphate;
grinding the precursor for the lithium-containing phosphate and a carbon source; and
increasing the temperature of a ground material to a first temperature T1 at a first rate in a protective gas atmosphere, maintaining the temperature at the first temperature T1 for a first time t1, then increasing the temperature to a second temperature T2 at a second rate, and maintaining the temperature at the second temperature T2 for a second time t2, so as to obtain a positive electrode active material,
wherein the positive electrode active material comprises a lithium-containing phosphate, and an X-ray diffraction pattern of the positive electrode active material tested in a fully charged state satisfies: there is a (311) crystal plane peak in a range of 35° to 36° and a (011) crystal plane peak in a range of 20° to 21°, and the ratio of a peak intensity I₃₁₁ of the (311) crystal plane peak to a peak intensity I₀₁₁ of the (011) crystal plane peak satisfies I₃₁₁/I₀₁₁ ≥ 0.008.

9. The preparation method according to claim 8, wherein the first rate is less than or equal to 4 °C/min, optionally 1 °C/min to 4 °C/min.

10. The preparation method according to any one of claims 8 to 9, wherein the first temperature T1 is greater than or equal to 400°C, optionally 400°C to 600°C, and more optionally 450°C to 550°C.

11. The preparation method according to any one of claims 8 to 10, wherein the first time t1 is greater than or equal to 1 h, optionally 1 h to 7 h, and more optionally 3 h to 5 h.

12. The preparation method according to any one of claims 8 to 11, wherein the second temperature T2 is greater than or equal to 720°C, optionally 720°C to 850°C, and more optionally 750°C to 810°C.

13. The preparation method according to any one of claims 8 to 12, wherein
the second rate is 1 °C/min to 10 °C/min, optionally 5 °C/min to 9 °C/min; and/or
the second time t2 is 5 h to 20 h, optionally 8 h to 15 h.

14. The preparation method according to any one of claims 8 to 13, wherein the carbon source comprises a first carbon source comprising a water-soluble polymer, and optionally, the weight content of the first carbon source is ≥ 50%, optionally 50% to 70%, based on the total weight of the carbon source.

15. The preparation method of claim 14, wherein the water-soluble polymer comprises one or more of polyethylene glycol, polyaniline, and respective derivatives thereof.

16. The preparation method according to any one of claims 14-15, wherein the carbon source further comprises a second carbon source comprising one or more of glucose, sucrose, lactose, and maltose; and
optionally, the weight content of the second carbon source is ≤ 50%, optionally 30% to 50%, based on the total weight of the carbon source.

17. A battery cell, comprising a positive electrode sheet comprising a positive electrode current collector and a positive electrode film layer provided on at least one surface of the positive electrode current collector, wherein the positive electrode film layer comprises the positive electrode active material according to any one of claims 1 to 7 or the positive electrode active material prepared by the preparation method according to any one of claims 8 to 16.

18. An electric device, comprising the battery cell according to claim 17.
